# EUROPÄISCHE PATENTSCHRIFT

(11) **EP 2 712 692 B1**
(45) Veröffentlichungstag und Bekanntmachung des Hinweises auf die Patenterteilung: **28.09.2016**
(21) Anmeldenummer: 13197768.8
(22) Anmeldetag: 07.03.2011
(51) Int. Cl.: B22F 3/105, B22F 5/04, F01D 5/28, F01D 25/00, B22F 5/00

(54) **Verfahren und Vorrichtung zur Herstellung eines Bauteils**
A process and apparatus for the manufacture of a component
Un procédé et un dispositif sur fabrication d'un composant

(30) Priorität: 11.03.2010 DE 102010011059
(43) Veröffentlichungstag der Anmeldung: 02.04.2014
(62) Teilanmeldung aus: 11707832.9
(73) Patentinhaber: MTU Aero Engines AG, 80995 München (DE)
(72) Erfinder: DUSEL, Karl-Heinz, 85716 Unterschleissheim (DE); HUTTNER, Roland, 82287 Jesenwang (DE); BAYER, Erwin, 85221 Dachau (DE); MÜCKE, Michael, 61206 Wöllstadt (DE)

(56) Entgegenhaltungen:
- WO-A1-2008/046388
- WO-A1-2011/050765
- WO-A2-2011/050790

## Beschreibung

Die vorliegende Erfindung betrifft ein Verfahren der im Oberbegriff des Patentanspruchs 1 angegebenen Art zur Herstellung eines Bauteils. Die Erfindung betrifft weiterhin eine Vorrichtung der im Oberbegriff des Patentanspruchs 4 angegebenen Art zur Herstellung eines Bauteils, insbesondere eines Bauteils einer Turbine oder eines Verdichters.

Verfahren und Vorrichtungen zur Herstellung eines Bauteils sind in einer großen Vielzahl bekannt. Insbesondere sind generative Fertigungsverfahren (sog. Rapid Manufacturing- bzw. Rapid Prototyping-Verfahren) bekannt, bei denen das Bauteil schichtweise aufgebaut wird. Vorwiegend metallische Bauteile können beispielsweise durch Elektronenstrahlschmelz- oder - sinterverfahren hergestellt werden. Bei einem derartigen Verfahren wird zunächst schichtweise mindestens ein pulverförmiger Bauteilwerkstoff auf eine Bauteilplattform im Bereich einer Aufbau- und Fügezone aufgetragen. Anschließend wird der Bauteilwerkstoff schichtweise lokal verschmolzen und/oder versintert, indem dem Bauteilwerkstoff im Bereich der Aufbau- und Fügezone Energie mittels wenigstens eines Elektronenstrahls zugeführt wird. Der Elektronenstrahl wird dabei in Abhängigkeit einer Schichtinformation der jeweils herzustellenden Bauteilschicht gesteuert. Nach dem Verschmelzen und/oder Versintern wird die Bauteilplattform schichtweise um eine vordefinierte Schichtdicke abgesenkt. Diese Schritte werden dann bis zur endgültigen Fertigstellung des Bauteils wiederholt. Ein Beispiel für ein derartiges Verfahren und eine entsprechende Vorrichtung ist in der WO 2008/046388 A1 offenbart.

Als nachteilig an derzeit bekannten Verfahren und Vorrichtungen ist der Umstand anzusehen, dass diese entweder vergleichsweise geringe Aufbauraten bei erhöhter Fertigungspräzision oder höhere Aufbauraten bei vergleichsweise geringer Fertigungspräzision erlauben. Hierdurch ergeben sich bei der Fertigung von Bauteilen für Strömungsmaschinen, insbesondere bei hohlen Strukturbauteilen für Turbinen oder Verdichter, lange Produktionszeiten und entsprechend hohe Herstellungskosten.

Aufgabe der vorliegenden Erfindung ist es, ein Verfahren sowie eine Vorrichtung der eingangs genannten Art zur Herstellung eines Bauteils zu schaffen, welche sowohl eine hohe Aufbaurate als auch eine hohe Fertigungspräzision ermöglichen.

Die Aufgabe wird erfindungsgemäß durch ein Verfahren mit den Merkmalen des Patentanspruchs 1 und eine Vorrichtung mit den Merkmalen des Patentanspruchs 4 gelöst. Vorteilhafte Ausgestaltungen mit zweckmäßigen Weiterbildungen der Erfindung sind in den jeweiligen Unteransprüchen angegeben.

Bei einem erfindungsgemäßen Verfahren zur Herstellung eines Bauteils, insbesondere eines Bauteils einer Turbine oder eines Verdichters ist es vorgesehen, dass der Bauteilwerkstoff in Schritt b) durch wenigstens zwei, vorzugsweise durch mindestens vier, Elektronenstrahlen verschmolzen und/oder versintert wird. Mit Hilfe von zwei oder mehr Elektronenstrahlen wird im Unterschied zum Stand der Technik eine erhöhte Aufbaurate bei gleichzeitig erhöhter Fertigungspräzision ermöglicht, da mehrere Schmelz- und/oder Sinterbereiche gleichzeitig erzeugt werden. Darüber hinaus entfällt die bisherige Bauraumbeschränkung, so dass auch große Bauteile problemlos hergestellt werden können. Die zwei oder mehr Elektronenstrahlen werden dabei durch Aufteilung mindestens eines Elektronenstrahls von mindestens einer Elektronenquelle erzeugt. Auf diese Weise können die Elektronenstrahlen flexibel und in Abhängigkeit des herzustellenden Bauteils erzeugt und ausgerichtet werden. Die Elektronenstrahlen können in Schritt b) trägheitsfrei in drei Dimensionen in der Auslenkung und im Energieniveau gesteuert werden, so dass nicht nur beliebig große, sondern auch besonders komplexe Bauteile hergestellt werden können. Durch zusätzliche Elektronenquellen kann die Aufbau- und Fügezone zudem nahezu unbeschränkt erweitert werden, so dass das Verfahren parallelisierbar ist und einfach skaliert werden kann.

Die Aufteilung des Elektronenstrahls kann parallel oder sequenziell erfolgen. Vorzugsweise findet eine sequenzielle Aufteilung Verwendung. Bei sequenzieller Aufteilung erfolgt diese derart schnell, dass makroskopisch mehrere Strahlen entstehen. Der aufgeteilte Strahl kann sequenziell zu unterschiedlichen Orten gelenkt werden. Dadurch kann an mehreren Orten zeitgleich gesintert bzw. verschmolzen werden. Die materialabhängige Zeitkonstante für das Sintern ist vorzugsweise deutlich größer als die Zeitkonstante der Strahlteilung. Dabei kann grundsätzlich vorgesehen sein, dass die Elektronenstrahlen so schnell auf zwei oder mehr unterschiedliche Positionen gelenkt werden, dass der Bauteilwerkstoff an all diesen Positionen quasi "gleichzeitig" verschmolzen bzw. versintert wird. Weiterhin kann vorgesehen sein, dass die Elektronenstrahlen wiederholt auf diese unterschiedlichen Positionen gelenkt werden, so dass der Schmelz- bzw. Sinterprozess an den betreffenden Positionen nicht abbricht und durchgängig aufrechterhalten wird.

In einer vorteilhaften Ausgestaltung der Erfindung ist vorgesehen, dass die Elektronenstrahlen zudem durch mehrere Elektronenquellen erzeugt werden. Auf diese Weise können die Elektronenstrahlen flexibel und in Abhängigkeit des herzustellenden Bauteils erzeugt und ausgerichtet werden.

In einer weiteren vorteilhaften Ausgestaltung der Erfindung ist vorgesehen, dass durch Wechselwirkung des Elektronenstrahls mit dem Bauteilwerkstoff emittierte Elektronen erfasst werden, wonach anhand der emittierten Elektronen eine eine Topographie des verschmolzenen und/oder versinterten Bauteilwerkstoffs charakterisierende Werkstoffinformation bzw. eine eine Topographie des Bauteils charakterisierende Bauteilinformation ermittelt wird. Hierdurch kann mit Hilfe der rasterelektronenmikroskopartigen Bewertung der momentan hergestellten Topographie des Bauteils eine unmittelbare Kontrolle des Herstellungsverfahrens durchgeführt werden. Insbesondere können die vorstehend im Zusammenhang mit der Herstellung des Bauteils erläuterten Vorteile im Hinblick auf unmittelbare Qualitätsüberwachung des momentanen Herstellungsschritts auch bei der Feinbearbeitung erzielt werden.

Ein weiterer Aspekt der Erfindung betrifft eine Vorrichtung zur Herstellung eines Bauteils, insbesondere eines Bauteils einer Turbine oder eines Verdichters, mit mindestens einer Pulverzuführung zum Auftrag von mindestens einem pulverförmigen Bauteilwerkstoff auf eine Bauteilplattform sowie mit mindestens einer Elektronenquelle, mittels welcher im Bereich einer Aufbau- und Fügezone der Bauteilplattform zumindest ein Elektronenstrahl für ein schichtweises und lokales Verschmelzen und/oder Versintern des Bauteilwerkstoffs erzeugbar ist. Erfindungsgemäß wird dabei eine erhöhte Aufbaurate bei gleichzeitig erhöhter Fertigungspräzision dadurch ermöglicht, dass die Vorrichtung Mittel zum Erzeugen von zumindest zwei, vorzugsweise von mindestens vier, Elektronenstrahlen umfasst. Mit Hilfe von zwei oder mehr Elektronenstrahlen wird im Unterschied zum Stand der Technik eine erhöhte Aufbaurate bei gleichzeitig erhöhter Fertigungspräzision ermöglicht, da mehrere Schmelz- und/oder Sinterbereiche gleichzeitig erzeugt werden können. Darüber hinaus entfällt die bisherige Bauraumbeschränkung, so dass auch große Bauteile problemlos hergestellt werden können. Die zwei oder mehr Elektronenstrahlen werden dabei durch Aufteilung eines Elektronenstrahls mindestens einer Elektronenquelle erzeugt. Die Elektronenstrahlen können trägheitsfrei in drei Dimensionen in der Auslenkung und im Energieniveau gesteuert werden, so dass nicht nur beliebig große, sondern auch besonders komplexe Bauteile hergestellt werden können. Durch zusätzliche Elektronenquellen kann die Aufbau- und Fügezone zudem nahezu unbeschränkt erweitert werden, so dass die Vorrichtung parallelisierbar ist und einfach skaliert werden kann. Die Mittel zum Erzeugen der zumindest zwei Elektronenstrahlen umfassen eine Einrichtung zum Aufspalten eines Elektronenstrahls mindestens einer Elektronenquelle. Auf diese Weise können die Elektronenstrahlen flexibel und in Abhängigkeit des herzustellenden Bauteils erzeugt und ausgerichtet werden. Die vorstehend im Zusammenhang mit den erfindungsgemäßen Verfahren vorgestellten bevorzugten Ausführungsformen und deren Vorteile gelten entsprechend für diese erfindungsgemäße Vorrichtung und umgekehrt.

Weitere Vorteile ergeben sich, indem die Mittel zum Erzeugen der zumindest zwei Elektronenstrahlen zudem mehrere Elektronenquellen umfassen. Auf diese Weise können die Elektronenstrahlen flexibel und in Abhängigkeit des herzustellenden Bauteils erzeugt und ausgerichtet werden.

In einer weiteren vorteilhaften Ausgestaltung der Erfindung ist vorgesehen, dass die Vorrichtung wenigstens eine Detektionseinrichtung zum Erfassen von durch Wechselwirkung des Elektronenstrahls mit dem Bauteilwerkstoff emittierten Elektronen sowie eine mit der Detektionseinrichtung gekoppelte Ermittlungseinrichtung umfasst, mittels welcher anhand einer die erfassten Elektronen charakterisierenden Steuerinformation der Detektionseinrichtung eine eine Topographie des verschmolzenen und/oder versinterten Bauteilwerkstoffs charakterisierende Werkstoffinformation ermittelbar ist. Hierdurch kann mit Hilfe der rasterelektronenmikroskopartigen Bewertung der momentan hergestellten Topographie des Bauteils eine unmittelbare Kontrolle des Herstellungsverfahrens durchgeführt werden. Erfindungsgemäß wird dabei eine erhöhte Aufbaurate des Bauteils bei gleichzeitig erhöhter Fertigungspräzision ermöglicht. Die erfindungsgemäße Vorrichtung ermöglicht somit im Unterschied zum Stand der Technik während der Herstellung des Bauteils eine präzise Kontrolle durch eine rasterelektronenmikroskopartige Oberflächenanalyse der aktuellen Bauteilschicht. Da Elektronen eine sehr viel kleinere Wellenlänge als sichtbares Licht haben, kann die Topographie dabei unter Verwendung des ohnehin vorhandenen Elektronenstrahls mit einer sehr hohen Auflösung ermittelt werden. Als emittierte Elektronen werden bevorzugt Sekundärelektronen, rückgestreute Elektronen und/oder Auger-Elektronen mittels der Detektionseinrichtung erfasst und zur Ermittlung der die Topographie charakterisierenden Werkstoffinformation als Steuerinformation an die Ermittlungseinrichtung übermittelt. Die Kenntnis der topographischen Werkstoffinformation ermöglicht in der Folge eine sofortige Korrektur bzw. Anpassung der mittels des Elektronenstrahls zugeführten Energie, wodurch sich die zur Herstellung des Bauteils benötigte Aufbauzeit bei gleichzeitig hoher Fertigungspräzision erheblich verkürzen lässt. Zudem kann in vielen Fällen auf etwaige Nachbearbeitungsschritte verzichtet werden, wodurch sich weitere Zeit- und Kosteneinsparungen ergeben. Es ist zu betonen, dass an Stelle von Bauteilen für Strömungsmaschinen grundsätzlich natürlich auch sonstige Bauteile mit Hilfe der erfindungsgemäßen Vorrichtung hergestellt werden können.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:
- Fig. 1: eine Prinzipdarstellung eines ersten Ausführungsbeispiels einer erfindungsgemäßen Vorrichtung zur Herstellung eines Bauteils; und
- Fig. 2: eine Prinzipdarstellung eines zweiten Ausführungsbeispiels der erfindungsgemäßen Vorrichtung zur Herstellung eines Bauteils.

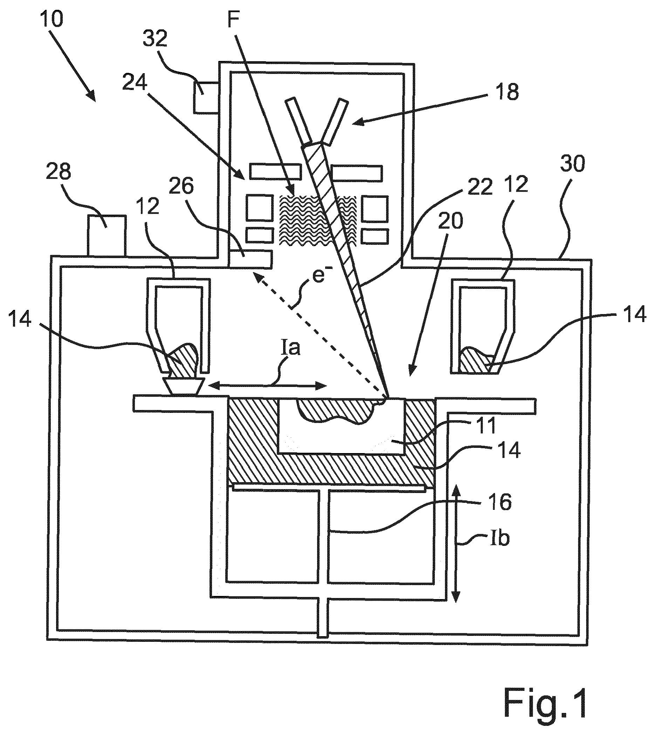

Fig. 1 zeigt eine Prinzipdarstellung eines ersten Ausführungsbeispiels einer erfindungsgemäßen Vorrichtung 10 zur Herstellung eines Bauteils 11, welches vorliegend zur Verwendung in einer Strömungsmaschine vorgesehen ist. Gleiche oder funktionsgleiche Elemente sind dabei im Folgenden mit identischen Bezugszeichen versehen. Bei dem Bauteil 11 handelt es sich im gezeigten Ausführungsbeispiel um ein hohles Strukturbauteil einer Turbine. Die Vorrichtung 10 umfasst eine gemäß Doppelpfeil Ia bewegbare Pulverzuführung 12 zum Auftrag von mindestens einem pulverförmigen Bauteilwerkstoff 14 auf eine gemäß Doppelpfeil Ib bewegbare Bauteilplattform 16. Weiterhin umfasst die Vorrichtung 10 zwei Elektronenquellen 18, mittels welchen im Bereich einer Aufbau- und Fügezone 20 der Bauteilplattform 16 Elektronenstrahlen 22 für ein schichtweises und lokales Verschmelzen und/oder Versintern des Bauteilwerkstoffs 14 erzeugt sind. Zum Einstellen der räumlichen Ablenkung, der Fokussierung und der thermischen Leistung der Elektronenstrahlen 22 umfasst die Vorrichtung 10 weiterhin eine Einrichtung 24 zum Erzeugen von elektromagnetischen Feldern F. Mittels der Einrichtung 24 werden die Elektronenstrahlen 22 der Elektronenquellen 18 in mehrere Elektronenstrahlen 22 aufgespalten werden.

Zur Kontrolle des Herstellungsverfahrens weist die Vorrichtung 10 eine Detektionseinrichtung 26 zum Erfassen von durch Wechselwirkung der Elektronenstrahlen 22 mit dem Bauteilwerkstoff 14 emittierten Elektronen e⁻ sowie eine mit der Detektionseinrichtung 26 gekoppelte Ermittlungseinrichtung 28 auf. Die Kopplungen zwischen den einzelnen Einrichtungen der Vorrichtung 10 sind aus Gründen der Übersichtlichkeit auch im Weiteren nicht dargestellt. Bei den erfassten Elektronen e⁻ handelt es sich bevorzugt um Sekundärelektronen, rückgestreute Elektronen und/oder Auger-Elektronen. Mit Hilfe der Ermittlungseinrichtung 28 kann anhand einer die erfassten Elektronen e⁻ charakterisierenden Steuerinformation der Detektionseinrichtung 26 eine eine Topographie des verschmolzenen und/oder versinterten Bauteilwerkstoffs 14 charakterisierende Werkstoffinformation ermittelt werden. Mit anderen Worten kann das Vernessen der Oberfläche und der Oberflächenbeschaffenheit des Bauteils 11 während des Bearbeitungsprozesses stattfinden. Dabei kann grundsätzlich vorgesehen sein, dass der Elektronenstrahl 22 so schnell auf zwei oder mehr unterschiedliche Positionen gelenkt wird, dass der Bauteilwerkstoff 14 an all diesen Positionen quasi "gleichzeitig" verschmolzen bzw. versintert wird. Bei Bedarf kann der Elektronenstrahl 22 zu diesem Zweck wie vorstehend beschrieben in mehrere Teilstrahlen aufgeteilt werden. Weiterhin kann vorgesehen sein, dass der Elektronenstrahl 22 wiederholt auf diese unterschiedlichen Positionen gelenkt wird, so dass der Schmelz- bzw. Sinterprozess an den betreffenden Positionen für einen gewünschten Zeitraum möglichst durchgängig aufrechterhalten wird.

Um die Herstellung des Bauteils 11 sauerstofffrei durchführen zu können und um eine unerwünschte Ablenkung sowohl der Elektronenstrahlen 22 als auch der Elektronen e- zu vermeiden, umfasst die Vorrichtung 10 eine Vakuumkammer 30, innerhalb welcher während der Herstellung des Bauteils 11 ein Hochvakuum erzeugt wird.

Zur Einstellung der Elektronenstrahlen 22 sind die Elektronenquellen 18, die Einrichtung 24 und die Ermittlungseinrichtung 28 mit einer digitalen Steuer- und/oder Regeleinrichtung 32 gekoppelt, welche ausgelegt ist, die Elektronenquellen 18 in Abhängigkeit einer Schichtinformation des herzustellenden Bauteils 11 und/oder in Abhängigkeit der ermittelten Werkstoffinformation anzusteuern. Die Steuer- und/oder Regeleinrichtung 32 erlaubt somit eine schnelle und präzise Anpassung der Elektronenstrahlen 22 an die Eigenschaften der jeweiligen Bauteilschicht. Weiterhin ist die Steuer- und/oder Regeleinrichtung 32 in der Lage, die Elektronenquellen 18 derart zu steuern, dass die Elektronenstrahlen 22 sequenziell mehrere Schmelz- und/oder Sinterpunkte auf der Aufbau- und Fügezone 20 in kürzester Abfolge anspringen. Räumlich kann die Ablenkung und die Fokussierung der Elektronenstrahlen 22 synchron mit der Leistung gesteuert werden. Gleichzeitig steht durch ein Erfassung und Auswertung der emittierten Elektronen e⁻ eine "Online-Überwachung" des Herstellungsverfahrens zur Verfügung. Durch die mehreren Elektronenstrahlen 22 und die unmittelbare Kontrollmöglichkeit des Schmelz- und/oder Sintervorgangs ergibt sich eine hohe Baugeschwindigkeit bei gleichzeitig hoher Fertigungspräzision. Durch die zwei oder mehr Elektronenquellen 18 gibt es zudem keine Beschränkung des Bauraums mehr, da die Elektronenquellen 18 frei und gegebenenfalls bewegbar innerhalb der Vakuumkammer 30 angeordnet werden können. Durch eine entsprechende Anordnung mehrerer Elektronenquellen 18 kann der Baubereich der Vorrichtung 10 nahezu unbeschränkt erweitert werden.

Anhand der Vorrichtung 10 wird im Folgenden die Herstellung des Bauteils 11 beschrieben werden. Zunächst wird der pulverförmige Bauteilwerkstoff 14 mit Hilfe der Pulverzuführung 12 schichtförmig auf der Bauteilplattform 16 im Bereich der Aufbau- und Fügezone 20 aufgetragen.

Alternativ können auch mehrere unterschiedliche Bauteilwerkstoffe 14 aufgetragen werden, wobei jede Bauteilschicht gegebenenfalls unterschiedlich ausbildbar ist. Anschließend wird der Bauteilwerkstoff 14 schichtweise lokal Verschmolzen und/oder Versintert, indem über die Elektronenstrahlen 22 Energie zugeführt wird. Die Energiezuführung über die Elektronenstrahlen 22 wird in der vorstehend beschriebenen Weise in Abhängigkeit einer Schichtinformation des Bauteils 11 und/oder in Abhängigkeit der die Topographie des verschmolzenen und/oder versinterten Bauteilwerkstoffs 14 charakterisierenden Werkstoffinformation gesteuert. Nach dem Verschmelzen und/oder Versintern wird die Bauteilplattform 16 um eine vordefinierte Schichtdicke abgesenkt. Die genannten Schritte werden dann bis zur Fertigstellung des Bauteils 11 wiederholt.

Falls gewünscht kann das Bauteil 11 nach seiner Herstellung zusätzlich noch oberflächenbearbeitet, insbesondere feinbearbeitet werden. Hierzu wird der Bauteiloberfläche des Bauteils 11 erneut mittels wenigstens eines Elektronenstrahls 22 Energie zugeführt, um die gewünschte Oberflächenstruktur zu erzeugen. Beispielsweise kann die Bauteiloberfläche in der Art eines Elektronenstrahl-Lithographie-Verfahrens und/oder durch Umschmelzen bearbeitet werden. Dabei wird die momentane Oberflächenstruktur des Bauteils 11 analog zu der vorstehend beschriebenen Weise wiederum durch Erfassen der durch Wechselwirkung des Elektronenstrahls 22 mit der Bauteiloberfläche emittierten Elektronen e- und anschließender Ermittlung einer eine Topographie des Bauteils 11 charakterisierenden Bauteilinformation ermittelt. Die räumliche Ablenkung, Fokussierung und/oder thermische Leistung des wenigstens einen Elektronenstrahls 22 kann unter Berücksichtigung dieser Bauteilinformation optimal eingestellt werden, um die gewünschte Oberflächenstruktur zu erzeugen.

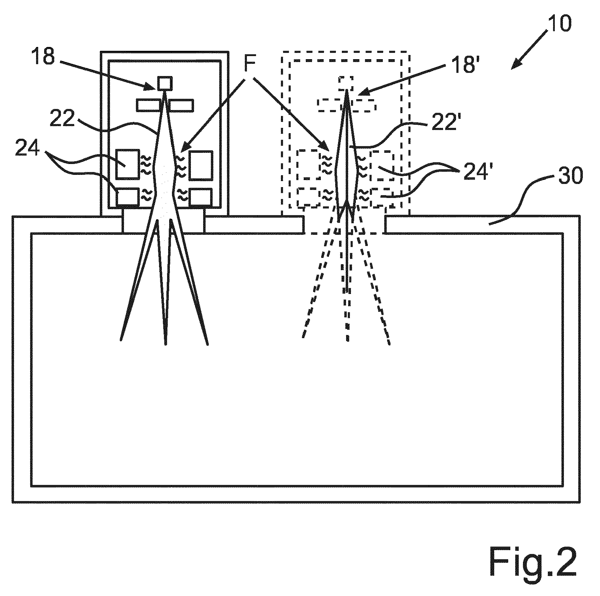

Fig. 2 zeigt eine Prinzipdarstellung eines zweiten Ausführungsbeispiels der erfindungsgemäßen Vorrichtung 10 zur Herstellung eines Bauteils 11. Verschiedene im Zusammenhang mit Fig. 1 dargestellten und erläuterten Bauelemente der Vorrichtung 10 sind in Fig. 2 aus Gründen der Übersichtlichkeit nicht dargestellt. Im Unterschied zum vorhergehenden Ausführungsbeispiel umfasst die in Fig. 2 gezeigte Vorrichtung 10 zwei räumlich getrennte Elektronenquellen 18, 18', mittels welchen räumlich getrennte Elektronenstrahlen 22, 22' für ein schichtweises und lokales Verschmelzen und/oder Versintern des Bauteilwerkstoffs 14 erzeugt werden. Zum Einstellen der räumlichen Ablenkung, der Fokussierung und der thermischen Leistung der Elektronenstrahlen 22, 22' umfasst die Vorrichtung 10 weiterhin jeweilige Einrichtungen 24, 24' zum Erzeugen von dem jeweiligen Elektronenstrahl 22, 22' zugeordneten elektromagnetischen Feldern F. Mit Hilfe der Einrichtungen 24, 24' können die Elektronenstrahlen 22, 22' der Elektronenquellen 18, 18' - wie vorstehend erläutert - aufgespalten werden. Dabei können die Elektronenstrahlen 22, 22' unabhängig voneinander verändert werden, wodurch das Herstellungsverfahren besonders flexibel durchführbar ist. Die Aufteilung kann parallel oder sequentiell erfolgen. Insbesondere können mehrere Schmelz- und/oder Sinterpunkte auf der Aufbau- und Fügezone 20 (nicht gezeigt) gleichzeitig erzeugt werden, wobei die Ablenkung, Fokussierung und Leistung der Elektronenstrahlen 22, 22' unabhängig voneinander gesteuert werden kann. Dabei kann grundsätzlich vorgesehen sein, dass die Elektronenstrahlen 22, 22' so schnell auf zwei oder mehr unterschiedliche Positionen gelenkt werden, dass der Bauteilwerkstoff 14 an all diesen Positionen quasi "gleichzeitig" verschmolzen bzw. versintert wird. Weiterhin kann vorgesehen sein, dass mindestens einer der Elektronenstrahlen 22, 22' in zwei oder mehr Teilstrahlen aufgeteilt wird. Weiterhin kann vorgesehen sein, dass die Elektronenstrahlen 22, 22' wiederholt auf diese unterschiedlichen Positionen gelenkt werden, so dass der Schmelz- bzw. Sinterprozess an den betreffenden Positionen nicht abbricht und durchgängig aufrechterhalten wird. Gleichzeitig kann das Vermessen der Oberflächengeometrie bzw. der Oberflächenbeschaffenheit des Bauteils 11 in der vorstehend beschriebenen Weise durchgeführt werden. Hierdurch wird eine besonders hohe Aufbaurate bei gleichzeitig erhöhter Fertigungspräzision ermöglicht. Darüber hinaus entfällt nahezu jede Bauraumbeschränkung, so dass auch große und/oder besonders komplexe Bauteile 11 problemlos hergestellt werden können. Durch weitere Elektronenquellen 18 kann die Aufbau- und Fügezone 20 (nicht gezeigt) zudem nahezu unbeschränkt erweitert werden, so dass das Verfahren parallelisierbar ist und einfach skaliert werden kann. und/oder mehrere Elektronenquellen umfassen. Auf diese Weise können die Elektronenstrahlen flexibel und in Abhängigkeit des herzustellenden Bauteils erzeugt und ausgerichtet werden.

In einer weiteren vorteilhaften Ausgestaltung der Erfindung ist vorgesehen, dass die Vorrichtung wenigstens eine Detektionseinrichtung zum Erfassen von durch Wechselwirkung des Elektronenstrahls mit dem Bauteilwerkstoff emittierten Elektronen sowie eine mit der Detektionseinrichtung gekoppelte Ermittlungseinrichtung umfasst, mittels welcher anhand einer die erfassten Elektronen charakterisierenden Steuerinformation der Detektionseinrichtung eine eine Topographie des verschmolzenen und/oder versinterten Bauteilwerkstoffs charakterisierende Werkstoffinformation ermittelbar ist. Hierdurch kann mit Hilfe der rasterelektronenmikroskopartigen Bewertung der momentan hergestellten Topographie des Bauteils eine unmittelbare Kontrolle des Herstellungsverfahrens durchgeführt werden. Die sich hieraus ergebenden Merkmale und deren Vorteile sind den vorhergehenden Beschreibungen zu entnehmen.

Weitere Merkmale der Erfindung ergeben sich aus den Ansprüchen, den Ausführungsbeispielen sowie anhand der Zeichnungen. Die vorstehend in der Beschreibung genannten Merkmale und Merkmalskombinationen sowie die nachfolgend in den Ausführungsbeispielen genannten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen. Dabei zeigt:
- Fig. 1: eine Prinzipdarstellung eines ersten Ausführungsbeispiels einer erfindungsgemäßen Vorrichtung zur Herstellung eines Bauteils; und
- Fig. 2: eine Prinzipdarstellung eines zweiten Ausführungsbeispiels der erfindungsgemäßen Vorrichtung zur Herstellung eines Bauteils.

Fig. 1 zeigt eine Prinzipdarstellung eines ersten Ausführungsbeispiels einer erfindungsgemäßen Vorrichtung 10 zur Herstellung eines Bauteils 11, welches vorliegend zur Verwendung in einer Strömungsmaschine vorgesehen ist. Gleiche oder funktionsgleiche Elemente sind dabei im Folgenden mit identischen Bezugszeichen versehen. Bei dem Bauteil 11 handelt es sich im gezeigten Ausführungsbeispiel um ein hohles Strukturbauteil einer Turbine. Die Vorrichtung 10 umfasst eine gemäß Doppelpfeil Ia bewegbare Pulverzuführung 12 zum Auftrag von mindestens einem pulverförmigen Bauteilwerkstoff 14 auf eine gemäß Doppelpfeil Ib bewegbare Bauteilplattform 16. Weiterhin umfasst die Vorrichtung 10 zwei Elektronenquellen 18, mittels welchen im Bereich einer Aufbau- und Fügezone 20 der Bauteilplattform 16 Elektronenstrahlen 22 für ein schichtweises und lokales Verschmelzen und/oder Versintern des Bauteilwerkstoffs 14 erzeugt sind. Zum Einstellen der räumlichen Ablenkung, der Fokussierung und der thermischen Leistung der Elektronenstrahlen 22 umfasst die Vorrichtung 10 weiterhin eine Einrichtung 24 zum Erzeugen von elektromagnetischen Feldern F. Mittels der Einrichtung 24 können die Elektronenstrahlen 22 der Elektronenquellen 18 - wie vorliegend gezeigt - zu einem Strahl vereinigt, voneinander getrennt oder in mehrere Elektronenstrahlen 22 aufgespalten werden.

Zur Kontrolle des Herstellungsverfahrens weist die Vorrichtung 10 eine Detektionseinrichtung 26 zum Erfassen von durch Wechselwirkung der Elektronenstrahlen 22 mit dem Bauteilwerkstoff 14 emittierten Elektronen e⁻ sowie eine mit der Detektionseinrichtung 26 gekoppelte Ermittlungseinrichtung 28 auf. Die Kopplungen zwischen den einzelnen Einrichtungen der Vorrichtung 10 sind aus Gründen der Übersichtlichkeit auch im Weiteren nicht dargestellt. Bei den erfassten Elektronen e⁻ handelt es sich bevorzugt um Sekundärelektronen, rückgestreute Elektronen und/oder Auger-Elektronen. Mit Hilfe der Ermittlungseinrichtung 28 kann anhand einer die erfassten Elektronen e⁻ charakterisierenden Steuerinformation der Detektionseinrichtung 26 eine eine Topographie des verschmolzenen und/oder versinterten Bauteilwerkstoffs 14 charakterisierende Werkstoffinformation ermittelt werden. Mit anderen Worten kann das Vernessen der Oberfläche und der Oberflächenbeschaffenheit des Bauteils 11 während des Bearbeitungsprozesses stattfinden. Dabei kann grundsätzlich vorgesehen sein, dass der Elektronenstrahl 22 so schnell auf zwei oder mehr unterschiedliche Positionen gelenkt wird, dass der Bauteilwerkstoff 14 an all diesen Positionen quasi "gleichzeitig" verschmolzen bzw. versintert wird. Bei Bedarf kann der Elektronenstrahl 22 zu diesem Zweck wie vorstehend beschrieben in mehrere Teilstrahlen aufgeteilt werden. Weiterhin kann vorgesehen sein, dass der Elektronenstrahl 22 wiederholt auf diese unterschiedlichen Positionen gelenkt wird, so dass der Schmelz- bzw. Sinterprozess an den betreffenden Positionen für einen gewünschten Zeitraum möglichst durchgängig aufrechterhalten wird.

Um die Herstellung des Bauteils 11 sauerstofffrei durchführen zu können und um eine unerwünschte Ablenkung sowohl der Elektronenstrahlen 22 als auch der Elektronen e- zu vermeiden, umfasst die Vorrichtung 10 eine Vakuumkammer 30, innerhalb welcher während der Herstellung des Bauteils 11 ein Hochvakuum erzeugt wird.

Zur Einstellung der Elektronenstrahlen 22 sind die Elektronenquellen 18, die Einrichtung 24 und die Ermittlungseinrichtung 28 mit einer digitalen Steuer- und/oder Regeleinrichtung 32 gekoppelt, welche ausgelegt ist, die Elektronenquellen 18 in Abhängigkeit einer Schichtinformation des herzustellenden Bauteils 11 und/oder in Abhängigkeit der ermittelten Werkstoffinformation anzusteuern. Die Steuer- und/oder Regeleinrichtung 32 erlaubt somit eine schnelle und präzise Anpassung der Elektronenstrahlen 22 an die Eigenschaften der jeweiligen Bauteilschicht. Weiterhin ist die Steuer- und/oder Regeleinrichtung 32 in der Lage, die Elektronenquellen 18 derart zu steuern, dass die Elektronenstrahlen 22 sequenziell mehrere Schmelz- und/oder Sinterpunkte auf der Aufbau- und Fügezone 20 in kürzester Abfolge anspringen. Räumlich kann die Ablenkung und die Fokussierung der Elektronenstrahlen 22 synchron mit der Leistung gesteuert werden. Gleichzeitig steht durch ein Erfassung und Auswertung der emittierten Elektronen e⁻ eine "Online-Überwachung" des Herstellungsverfahrens zur Verfügung. Durch die mehreren Elektronenstrahlen 22 und die unmittelbare Kontrollmöglichkeit des Schmelz- und/oder Sintervorgangs ergibt sich eine hohe Baugeschwindigkeit bei gleichzeitig hoher Fertigungspräzision. Durch die zwei oder mehr Elektronenquellen 18 gibt es zudem keine Beschränkung des Bauraums mehr, da die Elektronenquellen 18 frei und gegebenenfalls bewegbar innerhalb der Vakuumkammer 30 angeordnet werden können. Durch eine entsprechende Anordnung mehrerer Elektronenquellen 18 kann der Baubereich der Vorrichtung 10 nahezu unbeschränkt erweitert werden.

Anhand der Vorrichtung 10 wird im Folgenden die Herstellung des Bauteils 11 beschrieben werden. Zunächst wird der pulverförmige Bauteilwerkstoff 14 mit Hilfe der Pulverzuführung 12 schichtförmig auf der Bauteilplattform 16 im Bereich der Aufbau- und Fügezone 20 aufgetragen. Alternativ können auch mehrere unterschiedliche Bauteilwerkstoffe 14 aufgetragen werden, wobei jede Bauteilschicht gegebenenfalls unterschiedlich ausbildbar ist. Anschließend wird der Bauteilwerkstoff 14 schichtweise lokal Verschmolzen und/oder Versintert, indem über die Elektronenstrahlen 22 Energie zugeführt wird. Die Energiezuführung über die Elektronenstrahlen 22 wird in der vorstehend beschriebenen Weise in Abhängigkeit einer Schichtinformation des Bauteils 11 und/oder in Abhängigkeit der die Topographie des verschmolzenen und/oder versinterten Bauteilwerkstoffs 14 charakterisierenden Werkstoffinformation gesteuert. Nach dem Verschmelzen und/oder Versintern wird die Bauteilplattform 16 um eine vordefinierte Schichtdicke abgesenkt. Die genannten Schritte werden dann bis zur Fertigstellung des Bauteils 11 wiederholt.

Falls gewünscht kann das Bauteil 11 nach seiner Herstellung zusätzlich noch oberflächenbearbeitet, insbesondere feinbearbeitet werden. Hierzu wird der Bauteiloberfläche des Bauteils 11 erneut mittels wenigstens eines Elektronenstrahls 22 Energie zugeführt, um die gewünschte Oberflächenstruktur zu erzeugen. Beispielsweise kann die Bauteiloberfläche in der Art eines Elektronenstrahl-Lithographie-Verfahrens und/oder durch Umschmelzen bearbeitet werden. Dabei wird die momentane Oberflächenstruktur des Bauteils 11 analog zu der vorstehend beschriebenen Weise wiederum durch Erfassen der durch Wechselwirkung des Elektronenstrahls 22 mit der Bauteiloberfläche emittierten Elektronen e- und anschließender Ermittlung einer eine Topographie des Bauteils 11 charakterisierenden Bauteilinformation ermittelt. Die räumliche Ablenkung, Fokussierung und/oder thermische Leistung des wenigstens einen Elektronenstrahls 22 kann unter Berücksichtigung dieser Bauteilinformation optimal eingestellt werden, um die gewünschte Oberflächenstruktur zu erzeugen.

Fig. 2 zeigt eine Prinzipdarstellung eines zweiten Ausführungsbeispiels der erfindungsgemäßen Vorrichtung 10 zur Herstellung eines Bauteils 11. Verschiedene im Zusammenhang mit Fig. 1 dargestellten und erläuterten Bauelemente der Vorrichtung 10 sind in Fig. 2 aus Gründen der Übersichtlichkeit nicht dargestellt. Im Unterschied zum vorhergehenden Ausführungsbeispiel umfasst die in Fig. 2 gezeigte Vorrichtung 10 zwei räumlich getrennte Elektronenquellen 18, 18', mittels welchen räumlich getrennte Elektronenstrahlen 22, 22' für ein schichtweises und lokales Verschmelzen und/oder Versintern des Bauteilwerkstoffs 14 erzeugt werden. Zum Einstellen der räumlichen Ablenkung, der Fokussierung und der thermischen Leistung der Elektronenstrahlen 22, 22' umfasst die Vorrichtung 10 weiterhin jeweilige Einrichtungen 24, 24' zum Erzeugen von dem jeweiligen Elektronenstrahl 22, 22' zugeordneten elektromagnetischen Feldern F. Mit Hilfe der Einrichtungen 24, 24' können die Elektronenstrahlen 22, 22' der Elektronenquellen 18, 18' - wie vorstehend erläutert - zu einem Strahl vereinigt, getrennt oder aufgespalten werden. Dabei können die Elektronenstrahlen 22, 22' unabhängig voneinander verändert werden, wodurch das Herstellungsverfahren besonders flexibel durchführbar ist. Die Aufteilung kann parallel oder sequentiell erfolgen. Insbesondere können mehrere Schmelz- und/oder Sinterpunkte auf der Aufbau- und Fügezone 20 (nicht gezeigt) gleichzeitig erzeugt werden, wobei die Ablenkung, Fokussierung und Leistung der Elektronenstrahlen 22, 22' unabhängig voneinander gesteuert werden kann. Dabei kann grundsätzlich vorgesehen sein, dass die Elektronenstrahlen 22, 22' so schnell auf zwei oder mehr unterschiedliche Positionen gelenkt werden, dass der Bauteilwerkstoff 14 an all diesen Positionen quasi "gleichzeitig" verschmolzen bzw. versintert wird. Weiterhin kann vorgesehen sein, dass mindestens einer der Elektronenstrahlen 22, 22' in zwei oder mehr Teilstrahlen aufgeteilt wird. Weiterhin kann vorgesehen sein, dass die Elektronenstrahlen 22, 22' wiederholt auf diese unterschiedlichen Positionen gelenkt werden, so dass der Schmelz- bzw. Sinterprozess an den betreffenden Positionen nicht abbricht und durchgängig aufrechterhalten wird. Gleichzeitig kann das Vernessen der Oberflächengeometrie bzw. der Oberflächenbeschaffenheit des Bauteils 11 in der vorstehend beschriebenen Weise durchgeführt werden. Hierdurch wird eine besonders hohe Aufbaurate bei gleichzeitig erhöhter Fertigungspräzision ermöglicht. Darüber hinaus entfällt nahezu jede Bauraumbeschränkung, so dass auch große und/oder besonders komplexe Bauteile 11 problemlos hergestellt werden können. Durch weitere Elektronenquellen 18 kann die Aufbau- und Fügezone 20 (nicht gezeigt) zudem nahezu unbeschränkt erweitert werden, so dass das Verfahren parallelisierbar ist und einfach skaliert werden kann.

## Patentansprüche

1. Verfahren zur Herstellung eines Bauteils (11), insbesondere eines Bauteils (11) einer Turbine oder eines Verdichters, folgende Schritte umfassend:
a) Schichtweises Auftragen von mindestens einem pulverförmigen Bauteilwerkstoff (14) auf eine Bauteilplattform (16) im Bereich einer Aufbau- und Fügezone (20);
b) Schichtweises und lokales Verschmelzen und/oder Versintern des Bauteilwerkstoffs (14) durch Zuführen von Energie mittels wenigstens eines Elektronenstrahls (22) im Bereich der Aufbau- und Fügezone (20);
c) Schichtweises Absenken der Bauteilplattform (16) um eine vordefinierte Schichtdicke; und
d) Wiederholen der Schritte a) bis c) bis zur Fertigstellung des Bauteils (11), **dadurch gekennzeichnet, dass** der Bauteilwerkstoff (14) in Schritt b) durch wenigstens zwei, vorzugsweise durch mindestens vier, Elektronenstrahlen (22) verschmolzen und/oder versintert wird und die Elektronenstrahlen (22) durch Aufspalten von mindestens einem Elektronenstrahl (22) mindestens einer Elektronenquelle (18) erzeugt werden.

2. Verfahren nach Anspruch 1, **dadurch gekennzeichnet, dass** die Elektronenstrahlen (22) zudem durch mehrere Elektronenquellen (18) erzeugt werden.

3. Verfahren nach Anspruch 1 oder 2, **dadurch gekennzeichnet, dass** durch Wechselwirkung des Elektronenstrahls (22) mit dem Bauteilwerkstoff (14) emittierte Elektronen (e⁻) erfasst werden, wonach anhand der emittierten Elektronen eine eine Topographie des verschmolzenen und/oder versinterten Bauteilwerkstoffs (14) charakterisierende Werkstoffinformation ermittelt wird.

4. Vorrichtung (10) zur Herstellung eines Bauteils (11), insbesondere eines Bauteils (11) einer Turbine oder eines Verdichters, mit mindestens einer Pulverzuführung (12) zum Auftrag von mindestens einem pulverförmigen Bauteilwerkstoff (14) auf eine Bauteilplattform (16) sowie mit mindestens einer Elektronenquelle (18), mittels welcher im Bereich einer Aufbau- und Fügezone (20) der Bauteilplattform (16) zumindest ein Elektronenstrahl (22) für ein schichtweises und lokales Verschmelzen und/oder Versintern des Bauteilwerkstoffs (14) erzeugbar ist, **dadurch gekennzeichnet, dass** die Vorrichtung (10) Mittel zum Erzeugen von zumindest zwei, vorzugsweise von mindestens vier, Elektronenstrahlen (22) umfasst und die Mittel zum Erzeugen der zumindest zwei Elektronenstrahlen (22) eine Einrichtung (24) zum Aufspalten eines Elektronenstrahls (22) mindestens einer Elektronenquelle (18) umfassen.

5. Vorrichtung (10) nach Anspruch 4, **dadurch gekennzeichnet, dass** die Mittel zum Erzeugen der zumindest zwei Elektronenstrahlen (22) zudem mehrere Elektronenquellen (18) umfassen.

6. Vorrichtung (10) nach Anspruch 4 oder 5, **dadurch gekennzeichnet, dass** die Vorrichtung (10) wenigstens eine Detektionseinrichtung (26) zum Erfassen von durch Wechselwirkung des Elektronenstrahls (22) mit dem Bauteilwerkstoff (14) emittierten Elektronen sowie eine mit der Detektionseinrichtung (26) gekoppelte Ermittlungseinrichtung (28) umfasst, mittels welcher anhand einer die erfassten Elektronen charakterisierenden Steuerinformation der Detektionseinrichtung (26) eine eine Topographie des verschmolzenen und/oder versinterten Bauteilwerkstoffs (14) charakterisierende Werkstoffinformation ermittelbar ist.

## Claims

1. A method for producing a component (11), in particular a component (11) of a turbine or a compressor, comprising the following steps:
a) application in layers of at least one pulverulent component material (14) to a component platform (16) in the region of a build-up and joining zone (20);
b) melting and/or sintering of the component material (14) in layers and locally by supplying energy by means of at least one electron beam (22) in the region of the build-up and joining zone (20);
c) layer-wise lowering of the component platform (16) by a predefined layer thickness; and
d) repetition of steps a) to c) until the component (11) is completed;
**characterized in that** the component material (14) is melted and/or sintered in step b) by means of at least two, preferably by means of at least four, electron beams (22) and the electron beams (22) are generated by splitting at least one electron beam (22) of at least one electron source (18).

2. The method according to claim 1, **characterized in that** the electron beams (22) are generated by a plurality of electron sources (18).

3. The method according to claim 1 or 2, **characterized in that** electrons (e⁻) emitted by interaction of the electron beam (22) with the component material (14) are detected, whereupon with the aid of the electrons (e⁻) that are emitted material information characterizing the topography of the melted and/or sintered component material is ascertained.

4. The device (10) for producing a component (11), in particular a component (11) of a turbine or a compressor, having at least one powder supply (12) for application of at least one pulverulent component material (14) to a component platform (16) and also having at least one electron source (18) by means of which in the region of a build-up and joining zone (20) of the component platform (16) at least one electron beam (22) for melting and/or sintering the component material (14) in layers and locally can be generated, **characterized in that** the device (10) comprises means for generating at least two, preferably at least four, electron beams (22) and the means for generating at least two electron beams (22) comprise a unit (24) for splitting an electron beam (22) of at least one electron source (18).

5. The device (10) according to claim 4, **characterized in that** the means for generating the at least two electron beams (22) also comprise a plurality of electron sources (18).

6. The device (10) according to claim 4 or 5, **characterized in that** the device (10) comprises at least one detection unit (26) for detecting electrons (e⁻) emitted by interaction of the electron beam (22) with the component material (14) and also an ascertaining unit (28) which is coupled to the detection unit (26) and by means of which with the aid of control information of the detection unit (26) characterizing the detected electrons (e⁻) material information characterizing the topography of the melted and/or sintered component material (14) can be ascertained.

## Revendications

1. Procédé de fabrication d'un composant (11), en particulier d'un composant (11) d'une turbine ou d'un compresseur, comprenant les étapes suivantes consistant à :
a) appliquer couche par couche au moins un matériau de composant (14) en poudre sur une plateforme de composant (16) au niveau d'une zone de montage et d'assemblage (20) ;
b) fusionner et/ou fritter localement et couche par couche le matériau de composant (14) en alimentant de l'énergie au moyen d'au moins un faisceau d'électrons (22) au niveau de la zone de montage et d'assemblage (20) ;
c) descendre couche par couche la plateforme de composant (16) d'une épaisseur de couche prédéfinie ; et
d) répéter les étapes a) à c) jusqu'à ce que le composant (11) soit achevé,
**caractérisé en ce qu'**à l'étape b), le matériau de composant (14) est fusionné et/ou fritté par au moins deux, de préférence au moins quatre faisceaux d'électrons (22) et **en ce que** les faisceaux d'électrons (22) sont générés en divisant au moins une faisceau d'électrons (22) d'au moins une source électronique (18).

2. Procédé selon la revendication 1, **caractérisé en ce que** les faisceaux d'électrons (22) sont de plus générés par plusieurs sources d'électrons (18).

3. Procédé selon la revendication 1 ou 2, **caractérisé en ce que** l'interaction du faisceau d'électrons (22) avec le matériau de composant (14) permet de détecter des électrons émis (e⁻), les électrons émis permettant ensuite de déterminer une information de matériau caractérisant la topographie du matériau de composant (14) fusionné et/ou fritté.

4. Dispositif (10) de fabrication d'un composant (11), en particulier d'un composant (11) d'une turbine ou d'un compresseur, comprenant au moins une alimentation de poudre (12) pour appliquer au moins un matériau de composant (14) en poudre sur une plateforme de composant (16), ainsi qu'au moins une source d'électrons (18) au moyen de laquelle, au niveau d'une zone de montage et d'assemblage (20) de la plateforme de composant (16), au moins un faisceau d'électrons (22) peut être généré pour fusionner et/ou fritter le matériau de composant (14) localement et couche par couche, **caractérisé en ce que** le dispositif (10) comprend des moyens pour générer au moins deux, de préférence au moins quatre faisceaux d'électrons (22), et les moyens pour générer lesdits au moins deux faisceaux d'électrons (22) comprennent un équipement (24) pour diviser un faisceau d'électrons (22) d'au moins une source électronique (18).

5. Dispositif (10) selon la revendication 4, **caractérisé en ce que** les moyens pour générer lesdits au moins deux faisceaux d'électrons (22) comprennent de plus plusieurs sources d'électrons (18).

6. Dispositif (10) selon la revendication 4 ou 5, **caractérisé en ce que** le dispositif (10) comprend au moins un équipement de détection (26) pour détecter des électrons émis par l'interaction du faisceau d'électrons (22) avec le matériau de composant, ainsi qu'un équipement de détermination (28), couplé à l'équipement de détection (26), permettant à l'aide d'une information de commande de l'équipement de détection (26) caractérisant les électrons détectés de déterminer une information de matériau caractérisant la topographie du matériau de composant (14) fusionné et/ou fritté.
